(19) Europäisches Patentamt
European Patent Office
Office européen des brevets

(11) Veröffentlichungsnummer: **0 132 748**
**B1**

# (12) EUROPÄISCHE PATENTSCHRIFT

(45) Veröffentlichungstag der Patentschrift: **07.01.88**

(51) Int. Cl.4: **C 08 G 59/68**, H 01 B 3/40

(21) Anmeldenummer: **84108360.3**

(22) Anmeldetag: **16.07.84**

(54) **Verfahren zur Herstellung von Epoxidharzformstoffen.**

(30) Priorität: **29.07.83 DE 3327712**

(43) Veröffentlichungstag der Anmeldung: **13.02.85 Patentblatt 85/7**

(45) Bekanntmachung des Hinweises auf die Patenterteilung: **07.01.88 Patentblatt 88/1**

(84) Benannte Vertragsstaaten: **AT BE CH DE FR GB IT LI NL SE**

(56) Entgegenhaltungen:
**EP - A - 0 034 309**
**FR - A - 1 327 458**
**FR - A - 2 429 233**

(73) Patentinhaber: **Siemens Aktiengesellschaft Berlin und München, Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **Hacker, Heinz, Dr., Kaiserslautererstrasse 9, D-8500 Nürnberg (DE)**
Erfinder: **Hauschildt, Klaus-Robert, Balthasar-Neumann-Strasse 83, D-8500 Nürnberg (DE)**
Erfinder: **Kretzschmar, Klaus, Dr., Im Heuschlag 5, D-8520 Erlangen (DE)**

EP 0 132 748 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung hydrolysestabiler, elektrisch und mechanisch hochwertiger Formstoffe, Laminate, Schichtstoffe und Deck- oder Schutzschichten aus anionisch polymerisierbaren Di- oder Polyepoxidverbindungen oder Gemischen derartiger Verbindungen.

Es ist bekannt, dass Epoxidharze, insbesondere Glycidyletherharze, mit tertiären Aminen oder Bortrifluorid-Amin-Komplexen zu Formstoffen polymerisiert werden können; siehe dazu beispielsweise: E.S. Narracott in «British Plastics» 26, 120 (1953), P.P. Kushch, B.A. Komarov und B.A. Rozenberg in «Polymer Science U.S.S.R.» 21, 1867 (1979), P.P. Kushch, B.A. Komarov und B.A. Rozenberg in «Polymer Science U.S.S.R.» 24, 335 (1982) und M. Fedtke, M. Tarnow in «Plaste und Kautschuk» 30, 70 (1983). Bevorzugte Katalysatoren, beispielsweise für die Polymerisation von aromatischen Diglycidylethern auf der Basis von Bisphenol A und Bisphenol F, sind dabei Mannichbasen von aromatischen Kohlenwasserstoffen oder Phenolen und basische heterocyclische Verbindungen wie Morpholin und dessen Derivate; diese Verbindungen ergeben nämlich bei Temperaturen um 100°C in wenigen Stunden vernetzte Polymerisate. Die dabei erhaltenen Formstoffe sind zwar hydrolysestabil, das erzielbare mechanisch-thermische Eigenschaftsniveau ist aber durch eine Biegefestigkeit unter 100 N/mm² und durch einen Glasübergangsbereich von 80 bis 100°C gekennzeichnet. Bei dieser Art der Polymerisation entstehen aliphatische ungesättigte Strukturelemente, welche weiterhin die thermisch-oxidative Stabilität der Formstoffe deutlich senken.

Es ist ferner bereits bekannt, dass bei der Polymerisation von Epoxidharzen mit tertiären aromatischen Aminen mechanisch hochwertige Formstoffe erhalten werden. Nachteilig ist dabei aber die geringe Vernetzungsgeschwindigkeit dieser Systeme. Die Kombination von tertiären Aminen mit Mannichbasen bringt überraschenderweise technisch keinen Fortschritt, hierbei bleibt vielmehr das Niveau der Epoxid/Mannichbasen-Polymerisate erhalten. Weiterhin ist bekannt, dass Imidazol und Derivate davon in der Lage sind, aromatische Glycidylether und Glycidylester zu polymerisieren (siehe R. Dowbenko et al. in «Ind. Eng. Chem. Prod.», Vol. 10, Nr. 3, 344, 1971). Die dabei gebildeten Polymerisate liefern aber keine technisch verwendbaren Formstoffe.

Andererseits weisen durch anionische Polymerisation von Epoxidharzen erhaltene Formstoffe, im Vergleich zu Formstoffen aus durch Polyaddition vernetzten Epoxidharzen, den Vorteil eines besseren Verbundes zwischen der Harzmatrix und eingelagerten Füllstoffen, Fasern und dergleichen auf; entsprechendes gilt für die Haftung der Harzmatrix an anderen Materialien.

Aufgabe der Erfindung ist es, das Verfahren der eingangs genannten Art zur Herstellung von Formstoffen und dergleichen aus anionisch polymerisierbaren Di- oder Polyepoxidverbindungen in der Weise auszugestalten, dass – in wirtschaftlich vertretbaren Reaktionszeiten – Formstoffe mit einem mechanisch-thermischen Eigenschaftsniveau erhalten werden, das durch anionische Polymerisation bislang nicht erreicht werden konnte.

Dies wird erfindungsgemäss dadurch erreicht, dass die Epoxidverbindungen bzw. deren Gemische, gegebenenfalls in Gegenwart von Füllstoffen, Fasern, Vliesen oder Geweben, mit Mischkatalysatoren aus einem tertiären Amin der allgemeinen Formel

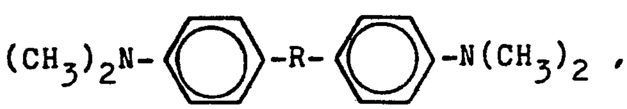

wobei R folgende Bedeutung hat:

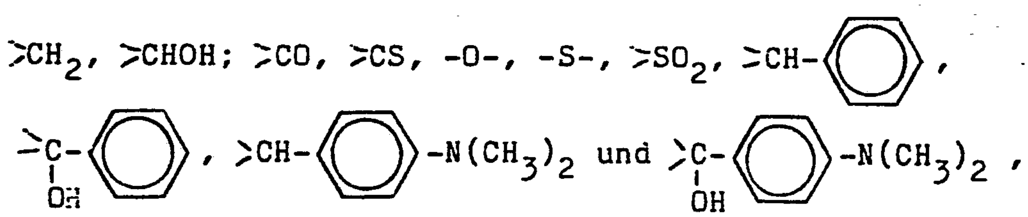

und einem Imidazol der allgemeinen Formel

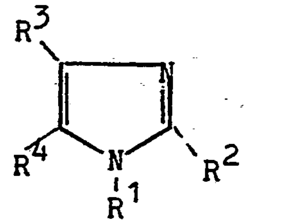,

wobei
$R^1$ = $-H, -CH_3, -(CH_2)_2-CN, -CH=CH_2, -(CH_2)_3-NH_2$ oder $-C_6H_5$,
$R^2$ = $-H, -CH_3, -C_2H_5, -CH(CH_3)_2$ oder $-C_6H_5$,
$R^3$ = $-H$ oder $-CH_3$ und
$R^4$ = $-H$ oder $-CH_3$ bedeutet,
dabei $R^1$, $R^2$, $R^3$ und $R^4$ aber nicht zugleich $-H$ und $R^1$ und $R^2$ nicht zugleich $-C_6H_5$ sind, in einem Zuge oder in Teilschritten polymerisiert werden.

Die nach dem erfindungsgemässen Verfahren hergestellten Formstoffe zeigen nicht nur eine gute Hydrolysestabilität, sondern sie weisen ausserdem eine sehr kleine Doppelbindungskonzentration und damit eine erhöhte chemisch-thermische Beständigkeit auf. Ein weiterer Vorteil des erfindungsgemässen Verfahrens besteht in der Möglichkeit, die Vernetzungsgeschwindigkeit der Reaktionsharzmassen über das Verhältnis der Mischkatalysatorkomponenten zu steuern sowie das mechanisch-thermische Eigenschaftsniveau der Formstoffe einzustellen.

Bei der Herstellung von Formstoffen erlaubt es das erfindungsgemässe Verfahren ferner, die Formbelegungszeiten ohne nachteilige Einflüsse auf das mechanisch-thermische Eigenschaftsniveau der Formstoffe deutlich zu senken, beispielsweise bis auf ein Zehntel der ohne den Zusatz der genannten speziellen Imidazole notwendigen Zeit. Als weiteres positives Ergebnis hat sich bei diesem Verfahren herausgestellt, dass durch die Verwendung der speziellen Mischkatalysatoren Polymerisatformstoffe mit bisher nicht erreichten Glasübergangsbereichen erhalten werden – bei zugleich hohem mechanischen Eigenschaftsniveau.

Beim erfindungsgemässen Verfahren werden – auf 100 Masseteile Epoxidverbindung – vorteilhaft 0.05 bis 10 Masseteile Mischkatalysator eingesetzt; vorzugsweise werden 0,1 bis 5 Masseteile Katalysator verwendet. Das Verhältnis von Imidazol zu tertiären Amin im Mischkatalysator liegt vorteilhaft zwischen 0,01 und 0,6; vorzugsweise beträgt dieses Verhältnis zwischen 0,02 und 0,4. Als Mischkatalysatoren finden vorzugsweise die Systeme 4.4′-Bis(dimethylamino)-benzophenon/2-Isopropylimidazol und 4.4′-Bis(dimethylamino)-benzyhdrol/2-Isopropylimidazol Verwendung.

Beim erfindungsgemässen Verfahren werden vorteilhaft folgende Epoxidverbindungen eingesetzt:

Bisphenol-A-diglycidylether, Bisphenol-F-diglycidylether, Polyglycidylether von Phenol/Formaldehyd- oder Kresol/Formaldehyd-Novolaken, Hexahydrophthalsäure-diglycidylester, Hydantoinepoxidharze, Glycidylisocyanurate, wie Triglycidylisocyanurat, und Urazolepoxide. Vorzugsweise werden dabei Epoxidharzgemische verwendet, d.h. Gemische aus zwei oder mehreren Epoxidharzen. Epoxidverbindungen der vorstehend genannten Art können auch aliphatische Verbindungen, wie hydrierte Bisphenol-A- und Bisphenol-F-diglycidylether zugesetzt werden.

Vorzugsweise wird das erfindungsgemässe Verfahren folgendermassen durchgeführt:

- Bisphenol-A- und/oder Bisphenol-F-diglycidylether wird mit 4 bis 8 Masseteilen, vorzugsweise 7 Masseteilen, Mischkatalysator mit einem Verhältnis Imidazol/tert. Amin von 0,2 bis 0,4 polymerisiert;
- Gemische von Bisphenol-A- und/oder Bisphenol-F-diglycidylether mit trifunktionellen Hydantoinepoxidharzen im Masseverhältnis von 20:80 bis 80:20, vorzugsweise 50:50, werden in Gegenwart von 4 bis 8 Masseteilen, vorzugsweise 7 Masseteilen, Mischkatalysator mit einem Verhältnis Imidazol/tert. Amin von 0,2 bis 0,4 polymerisiert.

Beim erfindungsgemässen Verfahren werden die Epoxidverbindungen in einem Zuge oder in Teilschritten polymerisiert. Unter einer Polymerisation in Teilschritten wird dabei eine Vorgehensweise verstanden, bei der die Überführung der Epoxidformmassen in die Formstoffe, welche unter Wärmezufuhr erfolgt, in mehreren Stufen vorgenommen wird.

Die nach dem erfindungsgemässen Verfahren hergestellten elektrisch und mechanisch hochwertigen Formstoffe eignen sich insbesondere als Isolierbauteile für die Elektrotechnik, für Giessharztransformatoren und zur Herstellung von Schaltstangen (für $SF_6$-Leistungsschalter).

Anhand von Ausführungsbeispielen soll die Erfindung noch näher erläutert werden.

Vergleichende Untersuchungen haben gezeigt, dass Mannichbasen oder Imidazole bei einer Temperatur von 120°C die Polymerisation schneller einleiten als tertiäre aromatische Amine der allgemeinen Formel

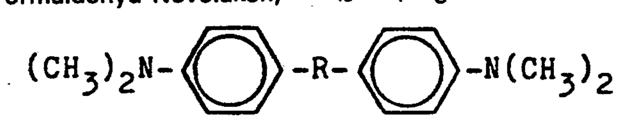

(mit der vorstehend angegebenen Bedeutung für R). Tabelle 1 zeigt dies am Beispiel der Gelierzeiten.

Tabelle 1

| Epoxidharz | Katalysator | Katalysatorkonzentration Mol-% | Reaktionstemperatur °C | Gelierzeit min |
|---|---|---|---|---|
| Bisphenol-A-diglycidyl-ether (EZ = 0,58) | 1.2-Dimethylimidazol | 1,16 | 120 | 0,5 |
| Bisphenol-A-diglycidyl-ether (EZ = 0,58) | 2-Isopropylimidazol | 1,10 | 120 | 120 |
| Bisphenol-A-diglycidyl-ether (EZ = 0,58) | N.N-Dimethylbenzylamin | 1,0 | 120 | 25 |
| Bisphenol-A-diglycidyl-ether (EZ = 0,58) | 4.4′-Bis (dimethylamino)-benzophenon | 2,0 | 120 | 1800 |

Insbesondere 4.4′-Bis(dimethylamino)-benzophenon (Michlers Keton) und 4.4′-Bis(dimethylamino)-diphenylcarbinol ergeben niedrige Polymerisationsgeschwindigkeiten. So erzeugte Formstoffe zeigen aber sehr gute mechanische und elektrische Eigenschaften, wie aus Tabelle 2 hervorgeht.

Tabelle 2

| | Formstoffdaten*) **) | | | | | | Vernetzungsbedingungen | |
|---|---|---|---|---|---|---|---|---|
| | BF | | SZ | | $T_M$ | | Zeit | Temperatur |
| | $\frac{N}{mm^2}$ | | $\frac{kJ}{m^2}$ | | °C | | h | °C |
| | (a) | (b) | (a) | (b) | (a) | (b) | | |
| Bisphenol-F-diglycidyl-ether/ Michlers Keton, 65% $SiO_2$ | 148 | 125[1] | 13,5 | o.B.[2] | 95 | 85 | 16<br>16 | 120<br>160 |
| Bisphenol-A-diglycidyl-ether/ Michlers Keton, 65% $SiO_2$ | 135 | 121[1] | 13,4 | o.B.[2] | 105 | 92 | 16<br>16 | 120<br>160 |
| Bisphenol-F-diglycidyl-ether/ trifunktionelles Hydantoinepoxidharz (50:50)/ Michlers Keton, 65% $SiO_2$ | 163 | 129 | 15,4 | 11,6 | 124 | 113 | 16<br>16 | 120<br>160 |

*) BF = Biegefestigkeit; SZ = Schlagzähigkeit; $T_M$ = Martenstemperatur
**) (a) mit 65% Quarzmehl; (b) Matrix
1) Grenzbiegespannung; 2) ohne Bruch

Die für die in Tabelle 2 wiedergegebenen Eigenschaften notwendigen Vernetzungszeiten (15 bis 20 h bei 120°C bis zur Entformbarkeit und mindestens ebenso lange Nachtemperzeiten bei erhöhten Temperaturen) sind technisch nicht tragbar. Andererseits führt aber die Polymerisation mit Katalysatoren, die höhere Reaktionsgeschwindigkeiten bewirken, wie in Tabelle 3 an Beispielen mit Imidazolen gezeigt wird, zu Formstoffen (Epoxidverbindung: Bisphenol-A-diglycidylether; EZ = 0,58) mit ungenügenden mechanischen Eigenschaften.

Tabelle 3

| Katalysator | Katalysatorkonzentration**) Mol-% | Formstoffdaten*) | | | | | | Gelierung*) in min bei °C | |
|---|---|---|---|---|---|---|---|---|---|
| | | BF | | SZ | | $T_M$ | | | |
| | | $\frac{N}{mm^2}$ | | $\frac{kJ}{m^2}$ | | °C | | | |
| | | (a) | (b) | (a) | (b) | (a) | (b) | (b) | |
| 1-Cyano-ethyl-2-ethyl-4-methyl-imidazol | 1,46 | 92 | 60 | 6,7 | 7,7 | 169 | 121 | 20 | 120 |
| 2-Isopropylimidazol | 1,46 | 93 | 49 | 7,3 | 7,5 | 146 | 117 | 60 | 120 |
| 1-Vinylimidazol | 1,46 | 34 | (-) | 3,3 | (-) | 98 | 74 | 118 | 120 |
| 1.2-Dimethylimidazol | 1,16 | (-) | (-) | (-) | (-) | (-) | (-) | 0,5 | 120 |
| 1.2-Dimethylimidazol | 1,10 | (-) | (-) | (-) | (-) | (-) | (-) | 22 | 120 |

*) (a) mit 65% Quarzmehl
(b) Matrix
**) bezogen auf die eingesetzte Epoxidverbindung
(–) Probekörper zu spröde, nicht messbar

Im Vergleich hierzu sind in Tabelle 4 die Eigenschaften von nach dem erfindungsgemässen Verfahren hergestellten Formstoffen wiedergegeben (die angegebenen Werte beziehen sich dabei auf die Matrix). Den Beispielen in Tabelle 4 liegt folgendes System zugrunde (MT = Masseteile):

50 MT Bisphenol-F-diglycidylether (EZ = 0,58), 50 MT trifunktionelles Epoxidharz auf Hydantoinbasis (EZ = 0,57; Araldit® XB 3085 der Ciba-Geigy AG, Basel), 5 MT 4.4′-Bis(dimethylamino)-benzophenon und x MT 2-Isopropylimidazol (siehe Tabelle 4).

Tabelle 4

| 2-Isopropylimidazol Masseteile | Formstoffdaten BF $\frac{N}{mm^2}$ | SZ $\frac{kJ}{m^2}$ | $T_M$ °C | Formbelegzeit h | Formtemperatur °C | Nachtemperung h | °C |
|---|---|---|---|---|---|---|---|
| 0 | 129,4 | 11,6 | 113 | 16 | 120 | 24 | 160 |
| 1 | 113,9 | 12,1 | 115 | 1,6 | 120 | 24 | 160 |
| 1,5 | 100,0 | 13,0 | 118 | 1,5 | 120 | 24 | 160 |
| 2 | 90,4 | 10,8 | 129 | 1,5 | 120 | 24 | 160 |

**Patentansprüche**

1. Verfahren zur Herstellung hydrolysestabiler, elektrisch und mechanisch hochwertiger Formstoffe, Laminate, Schichtstoffe und Deck- oder Schutzschichten aus anionisch polymerisierbaren Di- oder Polyepoxidverbindungen oder Gemischen derartiger Verbindungen, dadurch gekennzeichnet, dass die Epoxidverbindungen bzw. deren Gemische, gegebenenfalls in Gegenwart von Füllstoffen, Fasern, Vliesen oder Geweben, mit Mischkatalysatoren aus einem tertiären Amin der allgemeinen Formel

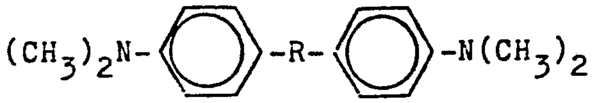 ,

wobei R folgende Bedeutung hat:

$>CH_2$, $>CHOH$, $>CO$, $>CS$, $-O-$, $-S-$, $>SO_2$, 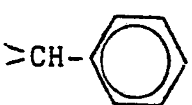 ,

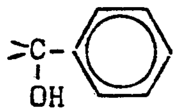 , 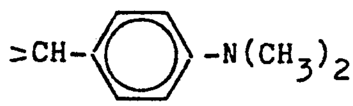 und 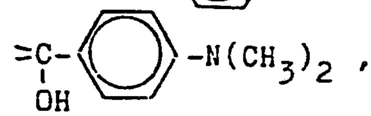 ,

und einem Imidazol der allgemeinen Formel

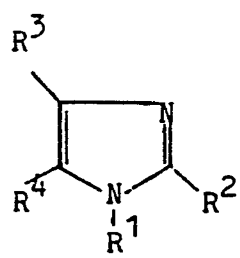

wobei
$R^1$ = $-H$, $-CH_3$, $-(CH_2)_2-CN$, $-CH=CH_2$, $-(CH_2)_3-NH_2$ oder $-C_6H_5$,
$R^2$ = $-H$, $-CH_3$, $-C_2H_5$, $-CH(CH_3)_2$ oder $-C_6H_5$,
$R^3$ = $-H$ oder $-CH_3$ und
$R^4$ = $-H$ oder $-CH_3$ bedeutet,
dabei $R^1$, $R^2$, $R^3$ und $R^4$ aber nicht zugleich $-H$ und $R^1$ und $R^2$ nicht zugleich $-C_6H_5$ sind, in einem Zuge oder in Teilschritten polymerisiert werden.

2. Verfahren nach Anspruch 1, dadurch gekennzeichnet, dass 0,05 bis 10 Masseteile, vorzugsweise 0,1 bis 5 Masseteile, an Mischkatalysator eingesetzt werden, jeweils bezogen auf 100 Masseteile Epoxidverbindung.

3. Verfahren nach Anspruch 1 oder 2, dadurch gekennzeichnet, dass das Masseverhältnis des Imidazols zum tertiären Amin zwischen 0,01 und 0,06, vorzugsweise zwischen 0,02 und 0,4, beträgt.

4. Verfahren nach Anspruch 1, dadurch gekennzeichnet, dass Bisphenol-A- und/oder Bisphenol-F-diglycidylether mit 4 bis 8 Masseteilen, vorzugsweise 7 Masseteilen, Mischkatalysator mit einem Verhältnis Imidazol/tert. Amin von 0,2 bis 0,4 polymerisiert werden.

5. Verfahren nach Anspruch 1, dadurch gekennzeichnet, dass Gemische von Bisphenol-A- und/oder Bisphenol-F-diglycidylether mit trifunktionellen Hydantoinepoxidharzen im Masseverhältnis von 20:80 bis 80:20, vorzugsweise 50:50, in Gegenwart von 4 bis 8 Masseteilen, vorzugsweise 7 Masseteilen, Mischkatalaysator mit einem Verhältnis Imidazol/tert. Amin von 0,2 bis 0,4 polymerisiert werden.

6. Verfahren nach einem der Ansprüche 1 bis

5, dadurch gekennzeichnet, dass als tertiäres Amin 4.4'-Bis(dimethylamino)-benzophenon und als Imidazol 2-Isopropylimidazol verwendet wird.

7. Verfahren nach einem der Ansprüche 1 bis 5, dadurch gekennzeichnet, dass als tertiäres Amin 4.4'-Bis(dimethylamino)-benzyhdrol und als Imidazol 2-Isopropylimidazol verwendet wird.

**Claims**

1. A method of producing moulded materials, laminates, layers, and covering or protective coatings of high electrical and mechanical quality and stable to hydrolysis from anionically polymerisable di- or polyepoxy compounds, or mixtures of such compounds, characterised in that the epoxy compounds, or mixtures thereof, where appropriate in the presence of fillers, fibres, fleeces or fabrics, are polymerised in one go or in separate steps with mixed catalysts consisting of a tertiary amine of the general formula

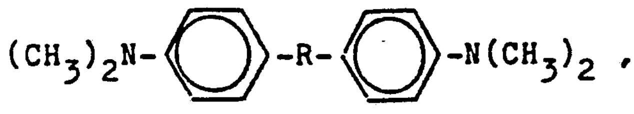

in which R has the following meaning:

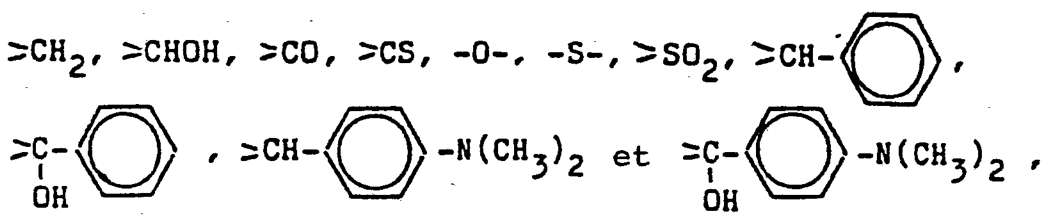

and an imidazole of the general formula

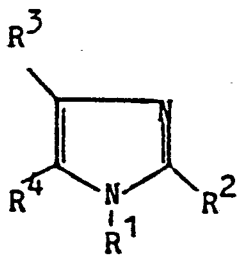

in which
$R^1$ = -H, $-CH_3$, $-(CH_2)_2-CN$, $CH=CH_2$, $-(CH_2)_3-NH_2$ or $-C_6H_5$,
$R^2$ = -H, $-CH_3$, $-C_2H_5$, $-CH(CH_3)_2$ or $-C_6H_5$,
$R^3$ = -H or $-CH_3$ and
$R^4$ = -H or $-CH_3$,
when $R^1$, $R^2$, $R^3$ and $R^4$ are not all simultaneously -H and $R^1$ and $R^2$ are not both simultaneously $-C_6H_5$.

2. A method as claimed in Claim 1, characterised in that 0.05 to 10 parts by weight, preferably 0.1 to 5 parts by weight, of mixed catalyst are used, in each case relative to 100 parts by weight of epoxy compound.

3. A method as claimed in Claim 1 or 2, characterised in that the weight ratio of the imidazole to the tertiary amine is between 0.01 and 0.6, preferably between 0.02 and 0.4.

4. A method as claimed in Claim 1, characterised in that bisphenol-A- and/or bisphenol-F-diglycidyl ether is or are polymerised with 4 to 8 parts by weight, preferably 7 parts by weight, of mixed catalyst with an imidazole/tertiary amine ratio of 0.2 to 0.4.

5. A method as claimed in Claim 1, characterised in that mixtures of bisphenol-A- and/or bisphenol-F-diglycidyl ether with trifunctional hydantoin epoxy resins in a weight ratio of 20:80 to 80:20, preferably 50:50, are polymerised in the presence of 4 to 8 parts by weight, preferably 7 parts by weight, of mixed catalyst with an imidazole/tertiary amine ratio of 0.2 to 0.4.

6. A method as claimed in one of claims 1 to 5, characterised in that 4.4'-bis(dimethylamino)-benzophenone is used as tertiary amine and 2-isopropylimidazole is used as imidazole.

7. A method as claimed in one of Claims 1 to 5, characterised in that 4.4'-bis(dimethylamino)-benzhydrol is used as tertiary amine and 2-isopropylimidazole is used as imidazole.

**Revendications**

1. Procédé de préparation de pièces moulées, de laminés, de stratifiés et de couches de finition ou de protection stables à l'hydrolyse et ayant de bonnes propriétés électriques et mécaniques à partir de composés diépoxydiques ou polyépoxydiques susceptibles de subir une polymérisation anionique ou de mélanges de composés de ce type, caractérisé en ce qu'il consiste à polymériser d'un coup ou en des stades partiels les composés époxydiques ou leurs mélanges, le cas échéant en présence de matières de charge de fibres, de non tissés ou de tissus, par des catalyseurs mixtes constitués d'une amine tertiaire de formule développée

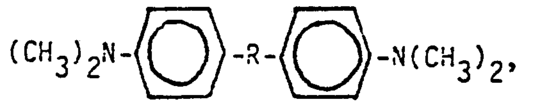

dans laquelle R a la signification suivante:

$\geq CH_2$, $\geq CHOH$, $\geq CO$, $\geq CS$, -O-, -S-, $\geq SO_2$, 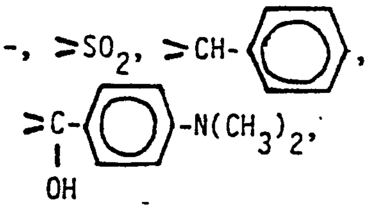,

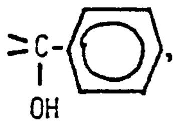, 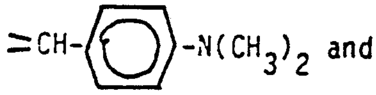 and ,

et d'un imidazole de formule développée

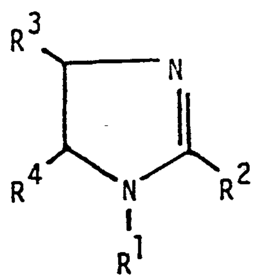

dans laquelle
$R^1$ = -H, $-CH_3$, $-(CH_2)_2-CN$, $-CH=CH_2$, $-(CH_2)_3-NH_2$ ou $-C_6H_5$,
$R^2$ = -H, $-CH_3$, $-C_2H_5$, $-CH(CH_3)_2$ ou $-C_6H_5$,
$R^3$ = -H ou $-CH_3$ et
$R^4$ = -H ou $-CH_3$
$R^1$, $R^2$, $R^3$ et $R^4$ n'étant pas en même temps -H et $R^1$ et $R^2$ n'étant pas en même temps $-C_6H_5$.

2. Procédé suivant la revendication 1, caractérisé en ce qu'il consiste à mettre en œuvre de 0,05 à 10 parties en poids, de préférence de 0,1 à 5 parties en poids du catalyseur mixte pour 100 parties en poids du composé époxdique.

3. Procédé suivant la revendication 1 ou 2, caractérisé en ce que le rapport pondéral de l'imidazole à l'amine tertiaire est compris entre 0,01 et 0,6, de préférence entre 0,02 et 0,4.

4. Procédé suivant la revendication 1, caractérisé en ce qu'il consiste à polymériser l'éther diglycidylique du bisphénol-A et/ou du bisphénol-F avec de 4 à 8 parties en poids, et de préférence 7 parties en poids, du catalyseur mixte, avec un rapport imidazole/amine tertiaire de 0,2 à 0,4.

5. Procédé suivant la revendication 1, caractérisé en ce qu'il consiste à polymériser des mélanges d'éther diglycidylique du bisphénol-A et/ou du bisphénol-F avec des résines époxydiques d'hydantoïne trifonctionnelles, en un rapport pondéral de 20:80 à 80:20, et de préférence de 50:50, en présence de 4 à 8 parties en poids, et de préférence de 7 parties en poids, du catalyseur mixte, avec un rapport imidazole/amine tertiaire de 0,2 à 0,4.

6. Procédé suivant l'une des revendications 1 à 5, caractérisé en ce qu'il consiste à utiliser comme amine tertiaire, la 4.4'-bis(diméthylamino)-benzophénone et comme imidazole le 2-isopropylimidazole.

7. Procédé suivant l'une des revendications 1 à 5, caractérisé en ce qu'il consiste à utiliser comme amine tertiaire, le 4.4'-bis(diméthylamino)-diphényl carbinol et comme imidazole le 2-isopropylimidazole.